(19) Europäisches Patentamt
European Patent Office
Office européen des brevets

(11) EP 2 583 337 B1

(12) **FASCICULE DE BREVET EUROPEEN**

(45) Date de publication et mention de la délivrance du brevet:
**25.02.2015 Bulletin 2015/09**

(21) Numéro de dépôt: **11736122.0**

(22) Date de dépôt: **16.06.2011**

(51) Int Cl.:
***H01M 4/62*** *(2006.01)* ***H01M 10/0525*** *(2010.01)*
***H01M 4/13*** *(2010.01)* ***H01M 10/054*** *(2010.01)*

(86) Numéro de dépôt international:
**PCT/FR2011/051374**

(87) Numéro de publication internationale:
**WO 2011/157958 (22.12.2011 Gazette 2011/51)**

(54) **PROCEDE POUR L'ELABORATION D'UNE BATTERIE AU LITHIUM OU AU SODIUM**

VERFAHREN ZUR HERSTELLUNG EINER LITHIUM- ODER NATRIUMBATTERIE

METHOD FOR PRODUCING A LITHIUM OR SODIUM BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.06.2010 FR 1054804**

(43) Date de publication de la demande:
**24.04.2013 Bulletin 2013/17**

(73) Titulaires:
- **Centre National de la Recherche Scientifique 75016 Paris (FR)**
- **Université de Picardie Jules Verne 80000 Amiens (FR)**

(72) Inventeurs:
- **DEVARAJ, Shanmukaraj F-80000 Amiens (FR)**
- **ARMAND, Michel F-75014 Paris (FR)**
- **GRUGEON, Sylvie F-60960 Feuquieres (FR)**
- **LARUELLE, Stéphane F-80470 Saveuse (FR)**
- **TARASCON, Jean-Marie F-91540 Mennecy (FR)**

(74) Mandataire: **Goulard, Sophie et al**
**Ipsilon Brema-Loyer**
**Le Centralis**
**63, avenue du Général Leclerc**
**92340 Bourg-la-Reine (FR)**

(56) Documents cités:
**EP-B1- 0 966 769**
**WO-A1-2004/047202**
**JP-A- 7 254 436**
**JP-A- 11 260 346**
**US-A1- 2009 202 905**

- **KOCH V R ET AL: "NEW ANIONS AS SUPPORTING ELECTROLYTES FOR RECHARGEABLE LITHIUM BATTERIES", JOURNAL OF POWER SOURCES, ELSEVIER SA, CH, vol. 20, no. 3/04, 1 janvier 1987 (1987-01-01), pages 287-291, XP001074282, ISSN: 0378-7753, DOI: DOI:10.1016/0378-7753(87)80125-8**
- **D. SHANMUKARAK AND AL: "Sacrificail salts : Compensating the initial charge irreversibility in lithium batteries", ELECTROCHEMISTRY COMMUNICATIONS, vol. 12, 18 juillet 2010 (2010-07-18), pages 1344-1347, XP002615952, DOI: 10.1016/j.elecom.2010.07.016**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 583 337 B1

## Description

La présente invention concerne un procédé d'élaboration d'une batterie utilisant les ions lithium ou des ions sodium comme vecteur électrochimique, ainsi que les batteries obtenues.

On connaît les batteries dites "lithium-ion", qui utilisent à l'électrode négative un dérivé du carbone. Le dérivé de carbone peut être un carbone dit "carbone dur" contenant majoritairement des atomes de carbone $sp^2$, un carbone dit "carbone tendre" contenant majoritairement des atomes de carbone $sp^3$, ou une variété intermédiaire de carbone dans lequel coexistent des proportions variables d'atome de carbone $sp^2$ et d'atomes de carbone $sp^3$. Le dérivé carboné peut aussi être un graphite naturel ou un graphite artificiel, éventuellement recouvert de carbone non graphité protégeant de l'exfoliation lors du fonctionnement électrochimique. Le principal inconvénient de ces matériaux est la consommation d'une partie du courant, et donc des ions lithium provenant de l'électrode positive lors de la première charge, avec pour résultat la formation sur l'électrode négative, d'une couche protectrice, dite de passivation (ou « SEI »), qui prévient une réaction ultérieure de l'électrolyte sur l'électrode négative dans laquelle vient s'insérer le lithium. Ce phénomène provoque une diminution de la densité d'énergie de la batterie puisque le lithium rendu inutilisable est prélevé sur le matériau de l'électrode positive, dont la capacité spécifique est faible (90 - 210 $niAh.g^{-1}$). En pratique, entre 5 et 25 % de la capacité initiale sont ainsi perdus.

On a étudié d'autres matériaux d'électrode négative tels que le silicium ou l'étain qui forment aisément des alliages avec le lithium. Ces alliages ont en théorie de très grandes capacités (≈ 2000 $mAh.g^{-1}$ pour Li-Si), mais ils subissent lors du fonctionnement de la batterie qui les contient comme matériau d'électrode, des variations de volume considérables (+ 400%). Cette variation de volume provoque une fragmentation du matériau et l'exposition d'une grande surface de contact avec l'électrolyte, et la formation de la couche de passivation sur l'électrode négative requiert de 25 à 40% de la capacité initiale. On a également étudié des alliages qui, en tant qu'électrode négative, fonctionnent par un principe dit d'"'extrusion"» tels que $Cu_3Sb$ par exemple. Lorsque cet alliage est utilisé, lors de la décharge, le lithium chasse le cuivre selon la réaction $3Li^+ 3e^- + Cu_3Sb \Leftrightarrow 3\ Cu° + Li_3Sb$ en formant une couche de passivation SEI et en immobilisant irréversiblement dans l'électrode négative, de 15 à 35 % du lithium initialement présent dans l'électrode positive.

Il est également connu d'utiliser comme matériau d'électrode négative des fluorures, des oxydes, des sulfures, des nitrures, ou des phosphures de métaux de transition, ou des fluorures, des oxydes, des sulfures, des nitrures, ou des phosphures de lithium et de métaux de transition, lesdits métaux de transition étant choisis parmi $T^M$ = V, Cr, Mn, Fe, Co, Ni, Cu, Zn. Par réaction avec le lithium, ces matériaux forment un système diphasé comprenant le métal $T^M$ et respectivement LiF, $Li_2O$, $Li_2S$, $Li_3N$, ou $Li_3P$ sous forme de mélange de particules ayant des tailles nanométriques. Ces réactions sont dites réactions « de conversion » et présentent une capacité importante (400 à 800 $inAh.g^{-1}$). La faible taille des grains du mélange diphasique formé donne à cette réaction une certaine réversibilité, les transports par diffusion/migration n'ayant à être assurés que sur des distances de quelques nanomètres. Cependant, les électrodes de ce type, dont la conception et la mise en oeuvre sont simples, présentent l'inconvénient d'avoir une capacité irréversible du premier cycle de 30 à 45 %, ce qui a empêché leur développement commercial.

On a cherché des moyens de compenser cette perte de lithium qui diminue en pratique la densité d'énergie, puisque il n'est pas possible techniquement de retirer la fraction de matériau d'électrode positive ayant servi à former la couche de passivation, celle-ci restant comme un poids mort lors du fonctionnement ultérieur de la batterie. Le composé $Li_xMn_2O_4$ est un composé connu comme matériau d'électrode positive dont la plage de fonctionnement est $0 \leq x \leq 1$, x étant 1 dans le composé de départ. Un traitement chimique par LiI par exemple, permet d'obtenir le composé stcechiométrique $Li_2Mn_2O_4$. Il est donc possible, en préparant des mélanges de composition prédéterminée $(1-\alpha)LiMn_2O_4 + (\alpha)Li_2Mn_2O_4$ d'injecter une quantité $\alpha$ de lithium supplémentaire dans l'électrode au stade initial d'une batterie. Toutefois, ce procédé est spécifique du composé $Li_xMn_2O_4$, et le composé $Li_2Mn_2O_4$ obtenu après traitement chimique ne présente pas des garanties de sécurité suffisantes pour la production de batteries de grande taille. En outre, la structure de $Li_2Mn_2O_4$ est très différence de celle de $LiMn_2O_4$ du fait de la distorsion de Jahn-Teller propre à l'ion $Mn^{3+}$ qui est majoritaire dans $Li_2Mn_2O_4$. Le passage de la structure $LiMn_2O_4$ à celle de $Li_2Mn_2O_4$ par lithiation chimique entraîne un effritement des grains, favorisant la dissolution du manganèse dans l'électrolyte et une perte de contact des grains subdivisés avec le carbone (généralement présent dans les matériaux d'électrode comme agent de conduction électronique). Les échanges électroniques entre les grains d'oxyde et le carbone sont ainsi plus limités, ce qui diminue la durée de vie en cyclage de la batterie.

Il a été aussi proposé d'ajouter des dispersions de lithium dans un solvant non réactif, tel qu'un hydrocarbure, lesdites dispersions étant stabilisées par des agents tensio-actifs tels que des acides gras à longue chaîne (stéarique). Ces dispersions doivent être ajoutées d'une manière dosée à la surface de l'électrode négative ou de l'électrode positive avant la dernière étape de fabrication de la batterie, c'est-à-dire avant l'assemblage des électrodes. Il est cependant très difficile de doser précisément les quantités de lithium ajoutées, et la manipulation des suspensions est dangereuse du fait de leur inflammabilité. Surtout, la mise en contact du lithium métallique avec le matériau d'électrode négative ou positive implique d'imposer un potentiel de 0 V vs. $Li^+/Li°$, ce qui peut détruire les matériaux d'électrode, mais aussi les

rendre sensibles à l'air et à l'humidité, c'est-à-dire dangereux à manipuler. Un des principaux avantages de la technologie lithium-ion est précisément la possibilité de fabriquer les générateurs à l'état déchargé en général dans une atmosphère d'air sec ("dry room") sans danger.

WO 2001/047202 décrit une composition de cathode comportant un additif à base de lithium choisi parmi le $Li_2CO_3$, $Li_2SO_3$, LiF, $Li_2O$, $Li_3N$, l'oxalate de lithium et leurs mélanges à base de $Li_2CO_3$ et une méthode de préparation d'une batterie Lithium-ion mettant en oeuvre une telle cathode.

Le sodium est appelé à être utilisé à la place du lithium dans les applications où la densité d'énergie stockée est moins critique que pour l'électronique portable ou le transport automobile, en particulier pour la gestion des énergies renouvelables. Le sodium ne donne qu'un nombre plus réduit de réactions d'insertion, mais on connaît en particulier $Na_2FePO_4Fe$ et $NaFeSO_4F$ qui sont des matériaux d'électrode positive très peu onéreux. Les "carbones durs", qui sont également utilisables comme matériau d'électrode négative, peuvent donner des insertions réversibles de $Na^+$ de l'ordre de 200 $mAh.g^{-1}$, mais ici aussi la formation d'une couche de passivation est nécessaire et représente une perte de 15 à 25% au premier cycle.

Par EP-0 966 769, il est connu d'ajouter un oxocarbone de métal alcalin à la matière active d'une électrode positive dans une batterie fonctionnant par circulation d'ions lithium entre les électrodes, dans le but de remédier au moins partiellement à la perte de capacité lors du 1$^{er}$ cyclage résultant de la formation d'une couche de passivation. Toutefois, lors du 1$^{er}$ cyclage de la batterie, l'oxydation de l'oxocarbone produit des radicaux anions solubles dans l'électrolyte, ce qui a pour effet de dégrader l'électrode négative. La capacité initiale est certes améliorée, mais au détriment de la durée de vie de la batterie.

Le but de la présente invention est de fournir une batterie qui utilise des ions lithium ou des ions sodium comme vecteur électrochimique, et dont le fonctionnement est amélioré par diminution de la perte de capacité lors du premier cycle décharge/charge.

Ce but est atteint par un procédé d'élaboration d'une batterie selon la revendication 1 qui fonctionne par circulation de cations de métal alcalin A choisi parmi Li et Na entre une électrode positive et une électrode négative séparées par un électrolyte, et dans laquelle :

- l'électrolyte est un matériau dans lequel les cations $A^+$ sont mobiles, choisi parmi les céramiques et les solutions d'un sel de $A^+$ dans un liquide polaire, un polymère ou leurs mélanges ;
- la matière active de l'électrode négative est un matériau qui possède un couple rédox dont le potentiel est de 0 V à 1,6 V par rapport au couple $A^+/A°$, choisi parmi le métal A, les alliages et les composés intermétalliques du métal A, et les matériaux capables de libérer de manière réversible des cations $A^+$ ;
- la matière active de l'électrode positive est un matériau qui possède un couple rédox dont le potentiel est supérieur à celui du couple de l'électrode négative, et qui est capable, de manière réversible, soit d'insérer des cations $A^+$, soit de réagir avec les cations $A^+$.

Ledit procédé consiste à assembler l'électrode négative, l'électrode positive et l'électrolyte, puis à soumettre l'assemblage à une première charge à la température de fonctionnement de la batterie.

Ledit procédé est caractérisé en ce que l'électrode positive utilisée lors de l'assemblage est constituée par un matériau composite d'électrode sur un collecteur de courant, ledit matériau composite contenant ladite matière active d'électrode positive et un sel dit "sel sacrificiel" qui est un sel d'un cation $E^+$ choisi parmi $Li^+$, $Na^+$, $K^+$ et les cations onium et d'un anion rédox choisi parmi les anions azoture, les anions cétocarboxylate, et les anions hydrazide éventuellement sous forme polymère, ledit sel sacrificiel ayant un couple rédox à un potentiel supérieur au potentiel du couple rédox de matière active de l'électrode négative.

Le sel sacrificiel est un composé capable de s'oxyder lors du 1$^{er}$ cycle charge-décharge de la batterie assemblée, à un potentiel supérieur au potentiel du couple rédox de la matière active d'électrode négative, de préférence dans le domaine de potentiel du couple rédox de la matière active d'électrode positive, par exemple dans un domaine de potentiel de 2,0 V à 4,6 V. Lors de son oxydation, le sel sacrificiel produit des ions $E^+$ qui pénètrent dans l'électrolyte, pendant qu'une quantité d'ions $A^+$ correspondant à une charge équivalente passent de l'électrolyte vers l'électrode négative. Lesdits ions $E^+$ compensent au moins partiellement la capacité perdue lors de la formation de la couche de passivation. L'oxydate du sel sacrificiel produit également des composés gazeux faciles à éliminer tels que $N_2$, CO ou $CO_2$ lors de l'élaboration de la batterie. En effet, lors de la construction des batteries, plus particulièrement des batteries lithium ion, de manière classique on introduit les électrodes et l'électrolyte assemblés dans une enveloppe, on soumet l'assemblage à un premier cycle charge-décharge qui produit d'une part un dégagement gazeux (même en l'absence du sel sacrificiel de la présente invention) et d'autre part une couche de passivation par réduction de l'électrolyte au niveau du matériau d'électrode négative qui fonctionne à des potentiels de 1,6 à 0 V par rapport au couple $Li^+/Li°$, puis on scelle l'enveloppe. Si l'enveloppe reste ouverte au cours du 1$^{er}$ cycle, les gaz sont éliminés au fur et à mesure qu'ils se forment, puis l'enveloppe est scellée. Si l''enveloppe est scellée pendant le 1$^{er}$ cycle, on la soumet à un vide partiel après le 1$^{er}$ cycle pour éliminer les gaz formés, puis on la scelle à nouveau.

Parmi les sels sacrificiels dans lesquels le cation est un cation onium, on préfère en particulier ceux qui sont liquides à la température normale ou à une température inférieure à 100°C. Parmi les cations onims, on peut en particulier citer les cations alkyl-métlryl-imidazolium, alkyl-métlryl-pyrrolidinium, et alkyl-triméthyl-ammonium dans lesquels les groupes alkyle ont de 2 à 8 atomes de carbone.

Un sel de potassium ou d'un cation onium défini ci-dessus pour $E^+$ peut être utilisé comme sel sacrificiel, bien que les ions potassium ou lesdits cations onium ne soient pas des ions vecteurs électrochimiques dans une batterie selon l'invention. En effet, les ions potassium et lesdits cations onium se réduisent à un potentiel plus négatif que $Li^+$ et $Na^+$, et le dépôt de Li ou de Na peut se faire sans interférence des ions potassium ou des cations organiques. De plus, les cations onium sont métastables aux potentiels de dépôt de Li ou de Na ou au potentiel de fonctionnement de l'électrode négative. En outre, un composé d'électrode négative, choisi parmi les matériaux d'insertion (tels que par exemple les titanates de lithium et les graphites) et les matériaux de conversion (par exemple les oxydes, les fluorures et les sulfures), est sélectif aux ions lithium ou sodium pour des raisons stériques. L'utilisation d'un sel de potassium ou d'un sel de cation onium a pour effet un enrichissement de l'électrolyte en cations autres que $A^+$, et diminuant la proportion des ions $A^+$ préexistant dans l'électrolyte.

L'addition du sel sacrificiel lors de l'élaboration de la batterie n'ajoute ainsi aucun poids inutile, puisque le cation $E^+$ est utile et l'anion du sel sacrificiel est éliminé sous forme gazeuse.

Le matériau d'électrode positive utilisé lors de l'élaboration d'une batterie selon l'invention peut contenir un ou plusieurs sels sacrificiels.

Parmi les composés utilisables comme sel sacrificiel, on peut citer en particulier ceux qui sont définis par les formules suivantes dans lesquelles A est Li ou Na, et $3 \leq n \leq 1000$. Chacune des valeurs indiquées en mAh/g représente la capacité spécifique obtenue dans une batterie lithium-ion lorsque l'additif est le sel de lithium de l'anion concerné. Il apparaît clairement que ces capacités sont largement supérieures à celle des matériaux d'électrode positive (100-200 $mAh.g^{-1}$).

| Familles ⇩ | ⇩ Composés ⇩ | | |
|---|---|---|---|
| Azotures | 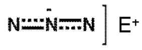 | | |
| | 567 mAh/g | | |
| Cétocarboxylates | 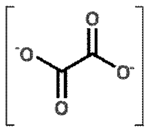 $2E^+$ | 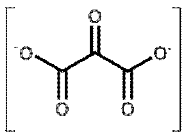 $2E^+$ Cétomalonate | 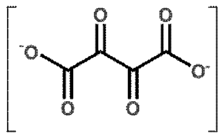 $2E^+$ Dicétosuccinate |
| | 545 mAh/g | 430 mAh/g | 352 mAh/g |
| Hydrazides | 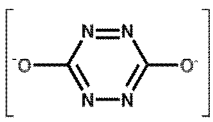 $2E^+$ sel de 1-4-dihydroxy-2,3,4,5-tétrazine | 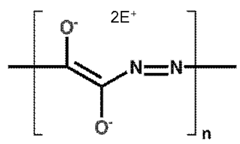 Polyhydrazide | |
| | 441 mAh/g | 567 mAh/g | |

Le procédé de l'invention est utile pour l'élaboration d'une batterie qui fonctionne par circulation d'ions $A^+$, et dans laquelle l'électrolyte comprend au moins un sel de A en solution dans un solvant.

L'électrolyte utilisé lors de l'assemblage de ladite batterie contient au moins un sel de A dissociable lorsqu'il est en solution dans un solvant liquide ou polymère.

Le sel de A peut être choisi notamment parmi les sels d'un anion répondant à l'une des formules suivantes : $ClO^{4-}$, $BF^{4-}$, $PF^{6-}$, $AsF^{6-}$, $SbF^{6-}$, $SCN^-$, $R_FSO_3^-$, $[(R_FSO_2)NSO_2R'_f]^-$, $[(R_FSO_2)C(Y)SO_2R_F']^-$ dans laquelle Y est CN ou $SO_2R_F''$, $[R_FSO_2(NCN)]^-$, $[R_FSO_2\{C(CN)_2\}]^-$, 2-perfluoroalkyl-4,5-dicyanoimidazole $[R_FC_5N_4]^-$, 4,5-dicyano-1,2,3-triazole $[C_4N_5]^-$, 2,5-bis(fluorosulfonyl)-1,3,4-triazole $[C_2F_2S_2O_4]^-$, et 3-cyano-5-perfluoroalkyle-1,3,4-triazole $[R_FC_3N_4]^-$, $R_F$, $R_F'$ et $R_F''$ étant des groupes alkyle dans lesquelles au moins 60 % des atomes d'hydrogène sont remplacés par des atomes de fluor.

Après le premier cycle charge-décharge de la batterie assemblée, l'électrolyte contient en outre un sel du cation

$E^+$. Les cations $E^+$ proviennent au moins en partie du sel sacrificiel qui se trouve dans le matériau d'électrode positive lors de l'élaboration de la batterie. Les cations $E^+$ peuvent également provenir d'un sel de $E^+$ ajouté au matériau destiné à former l'électrolyte lors de son élaboration.

Le solvant de l'électrolyte d'une batterie fonctionnant par circulation d'ions lithium peut être un solvant liquide éventuellement gélifié par addition d'un polymère, ou un solvant polymère éventuellement plastifié par un solvant liquide.

Un solvant liquide peut être constitué par au moins un solvant aprotique polaire choisi par exemple parmi les carbonates cycliques et linéaires (par exemple le carbonate d'étlrylène, le carbonate de propylène, le carbonate de butylène, le carbonate de diméthyle, le carbonate de diéthyle, le carbonate de dipropyle, le carbonate d'éthyle-méthyle, le carbonate de vinylène, les éthers cycliques (par exemple le THF), les éthers de polyéthylène glycols $RO(CH_2CH_2O)_nR'$ dans lesquels R et R' sont $CH_3$ ou $C_2H_5$, et $1 \leq n \leq 12$, les tétraalkyl sulfamides $RR'NSO_2NR''R'''$ dans lesquels R, R', R" et R"' sont $CH_3$ ou $C_2H_5$, la 3-méthyl-1,3-oxazolidine-2-one, et les esters cycliques (par exemple la $\gamma$-butyrolactone).

Un solvant liquide peut être constitué par un liquide ionique, choisi par exemple parmi les sels ayant un cation choisi parmi les cations $E^+$ du type onium et un anion choisi parmi les anions des sels de lithium mentionnés ci-dessus. Il est particulièrement avantageux d'utiliser un solvant du type liquide ionique choisi parmi les sels de cations organiques utilisables comme sels sacrificiels. Dans ce cas, la variation de concentrations relatives dans l'électrolyte entre les ions $A^+$ et les ions $E^+$ est faible, à cause de la très grande concentration en ions $E^+$, c'est-à-dire de 5 M à 15 M.

Ledit solvant liquide (liquide polaire aprotique ou liquide ionique) peut éventuellement être gélifié par addition d'un polymère obtenu par exemple à partir d'un ou plusieurs monomères choisis parmi l'oxyde d'étlrylène, l'oxyde de propylène, le méthacrylate de méthyle, l'acrylate de méthyle, l'acrylonitrile, le méthacrylonitrile, et le fluorure de vinylidène, ledit polymère ayant une structure de type linéaire, de type peigne, statistique, alterné ou à bloc, réticulé ou non. Un solvant polymère est constitué par un polymère solvatant, par exemple un poly(oxyde d'éthylène) ou un copolymère contenant au moins 50 % de motifs de répétition $-CH_2CH_2O-$ et ayant une structure de type linéaire, de type peigne, statistique, alterné ou à bloc, réticulé ou non. Ledit solvant polymère peut éventuellement être plastifié par addition d'un liquide, en particulier un liquide aprotique polaire utilisable comme solvant pour un électrolyte liquide.

Dans un 1er mode de réalisation d'une batterie fonctionnant par circulation d'ions $A^+$ et dans laquelle l'électrolyte est une solution d'un sel de $A^+$ dans un solvant, l'électrode positive est constituée par un collecteur de courant portant une matière composite d'électrode. Lors de l'élaboration de la batterie, le matériau composite initial, destiné à former l'électrode positive, comprend au moins une matière active d'électrode positive, un agent de conduction électronique, au moins un sel sacrificiel et éventuellement un liant. La teneur en matière active dudit matériau composite est de préférence de 5 à 95% en poids, la teneurs en agent de conduction électronique est de préférence de 0,1 à 30% en poids, la teneur en liant varie de préférencede 0 à 25% en poids, et la teneur en sel sacrificiel est de préférence de 5 à 70% en poids. Après la première charge, ledit matériau composite comprend la matière active d'électrode, l'agent de conduction électronique et l'éventuel liant introduits initialement.

L'agent de conduction électronique est de préférence un matériau carboné, par exemple du noir de carbone, du noir d'acétylène, du graphite naturel ou synthétique, des nanotubes de carbone, ou un mélange de ces composés.

Le liant de l'électrode positive peut être choisi parmi les matériaux mentionnés ci-dessus comme électrolyte liquide gélifié ou électrolyte polymère. Le liant peut en outre être constitué par un polymère, choisi par exemple parmi les copolymères éthylène-propylène contenant éventuellement un motif permettant la réticulation, les copolymères styrène-butadiène, en particulier sous forme les latex, les latex de poly(tétrafluoroéthylène), les dérivés de cellulose (par exemple la carboxymétlryl cellulose ou l'hydroxyéthylcellulose). Dans un mode de réalisation particulier, ces polymères peuvent contenir une fraction d'unités récurrentes destinées à augmenter l'adhésion du polymère aux grains de matière active, et/ou au collecteur de courant. Lesdites unités récurrentes peuvent être en particulier, des unités contenant des groupements carboxyliques, des unités dérivées de l'anhydride maléique, ou des groupements acides phosphoniques.

La matière active d'électrode positive capable d'insérer des ions sodium de manière réversible peut être choisie parmi :

- les fluorophosphates lamellaires $Na_2TPO_4F$ dans lesquels T représente un élément divalent choisi parmi Fe, Mn, Co, et Ni, qui peuvent être remplacés partiellement par Mg ou Zn,

- les fluorosulfates $NaT'SO_4F$ dans lesquels T' représente au moins un élément choisi parmi Fe, Mn, Co et Ni, dont une partie peut être remplacée par Mg et une partie des groupements sulfates $SO_4^{2-}$ peut être remplacés par le groupement iso-stère et iso-charge $PO_3F^{2-}$;

- les polysulfures $Na_2S_n$ ($1 \leq n \leq 6$), et les sels de sodium du dimercaptothiadiazole et du dimercaptooxazole ;

- les dithiocarbamates $Na[CS_2NR'R'']$ dans lesquels chacun des groupes R' et R" représente un radical méthyle, éthyle, ou propyle, ou bien R' et R" formant un cycle (par exemple la pyrolidine ou la morpholine).

Dans un mode de réalisation, la matière active d'électrode positive capable d'insérer des ions lithium de manière réversible peut être choisie parmi :

- les chalcogénures de métaux de transition, en particulier les oxydes $Li_xTaO_2$ dans lesquels $0 \leq x \leq 1$ et $T^a$ représente au moins un élément choisi parmi Co, Ni et Mn, dont une partie peut être replacée par Mg ou Al ;
- les phosphates de structure olivine $Li_xT^bPO_4$, $0 \leq x \leq 1$, dans lesquels $T^b$ représente au moins un élément choisi parmi Fe et Mn, dont une partie peut être remplacée par Co, Ni ou Mg ;
- les silicates $Li_{2-x}T^cSiO_4$, et les fluorophosphates $Li_xT^cPO_4F$ dans lesquels $T^c$ représente au moins un élément choisi parmi Fe, Mn, Co, Ni, et Ti, dont une partie peut être remplacée par Mg ou Al ;
- les fluorosulfates $Li_xT^dSO_4F$ dans lesquels $T^d$ représente au moins un élément choisi parmi Fe, Mn, Co, et Ni, dont une partie peut être remplacée par Mg et une partie des groupement sulfates $SO_4^{2-}$ peut être remplacés par le groupement iso-stère et iso-charge $PO_3F^{2-}$ ;
- les polysulfures $Li_2S_n$ $1 \leq n \leq 6$, les sels de lithium du dimercaptothiadiazole et du dimercaptooxazole..

Dans un autre mode de réalisation d'une batterie fonctionnant par circulation d'ions lithium dans laquelle l'électrolyte est une solution d'un sel de lithium dans un solvant, l'électrode positive est constituée par du carbone et éventuellement un catalyseur (par exemple $MnO_2$ sous forme finement divisée). Dans ce mode de réalisation, la batterie dite "lithium-air" fonctionne par réaction entre l'oxygène de l'air (agissant en tant que matière active d'électrode positive) et le lithium de l'électrode négative. La création d'une porosité dans l'électrode positive (dite "électrode à oxygène") lors de la décomposition du sel sacrificiel pendant la première charge crée une porosité qui favorise la pénétration dans la batterie de l'oxygène de l'air, et par voie de conséquence la réaction avec l'électrode négative. Une électrode positive dite "électrode à oxygène" peut être utilisée dans une batterie comprenant une anode de lithium ou d'alliage de lithium, ou une anode comprenant un matériau d'insertion du lithium. Le matériau utilisé pour l'élaboration de l'électrode positive contient le carbone, éventuellement le catalyseur, et au moins un sel sacrificiel, de préférence dans les proportions en poids suivantes : de 1 à 60% de carbone, de 5 à 95% de sel sacrificiel, et de 0 à 20 % de catalyseur.

Dans une batterie dite "au lithium", l'électrode négative est un film de lithium métallique.

Dans une batterie dite "lithium-ion", l'électrode négative est constituée par un collecteur de courant portant une matière composite d'électrode, comprenant une matière active d'électrode négative, éventuellement un agent de conduction électronique, et éventuellement un liant. L'agent de conduction électronique et le liant peuvent être choisis parmi ceux mentionnés ci-dessus pour l'électrode positive. La matière active d'électrode négative peut être un matériau capable d'insérer de manière réversible des ions lithium. Ce matériau peut être notamment un carbone dur ayant un rapport "nombre d'atomes $sp^3$/nombre d'atomes $sp^2$" de l'ordre de 20%, un carbone tendre ayant un rapport "nombre d'atomes $sp^3$/nombre d'atomes $sp^2$" de l'ordre de 100%, un carbone à dureté intermédiaire, un graphite naturel ou artificiel, un dicarboxylate de lithium (en particulier le téréphtalate de lithium). La matière active peut en outre être un alliage de lithium, (par exemple un alliage silicium-lithium ou étain-lithium) ou un autre composé intermétallique de lithium (par exemple le composé LiAl), le titanate de lithium $Li_4Ti_5O_{12}$ éventuellement dopé par Mg, ou le dioxyde de molybdène ou de tungstène. Lorsque le matériau d'électrode négative contient un alliage de Li ou un composé intermétallique de lithium comme matière active, il contient nécessairement un agent de conduction électronique.

Dans une batterie dite "au sodium", l'électrode négative est constituée par du sodium métallique. Lors de l'élaboration d'une batterie dans laquelle la matière active de l'électrode négative est du sodium métal, il n'est pas nécessaire d'introduire le sodium métal en préliminaire. Du sodium au degré d'oxydation 0 se déposera sur le collecteur de courant de l'électrode négative lors de la 1ère charge de la batterie, par décomposition d'un composé de sodium ajouté comme sel sacrificiel dans le matériau composite utilisé pour l'élaboration de l'électrode positive et par réaction électrochimique du sel de sodium de l'électrolyte à l'interface entre l'électrolyte et le collecteur de courant.

Dans une batterie dite "sodium-ion", l'électrode négative est constituée par un collecteur de courant portant une matière composite d'électrode, comprenant une matière active d'électrode négative, un agent de conduction électronique, et éventuellement un liant. L'agent de conduction électronique et le liant peuvent être choisis parmi ceux mentionnés ci-dessus pour l'électrode positive. La matière active d'électrode négative est un matériau capable d'insérer de manière réversible des ions sodium. Ce matériau peut être notamment un carbone mésoporeux, un dicarboxylate de sodium (en particulier les téréphtalates de sodium), une ferrite de sodium $Na_xFeO_2$, un titanate de sodium et d'aluminium $Na_xTi_{l-z}Al_zO_2$ ($0 \leq x \leq 1$, $0 \leq z \leq 0{,}4$) de structure lamellaire, également désigné par "hollandite", ou par un alliage de sodium, par exemple un alliage étain-sodium ou un alliage plomb-sodium.

Le procédé de l'invention peut en outre être mis en oeuvre pour l'élaboration d'une batterie fonctionnant par circulation d'ions sodium dans laquelle l'électrolyte est une céramique.

Le matériau utilisé pour former l'électrolyte céramique lors du montage de la batterie peut être choisi par exemple parmi l'alumine $\beta$, l'alumine $\beta$", les phosphosilicates de structure Nasicon, et les verres à base de $Na_2O$ et d'au moins un oxyde formateur choisi parmi $SiO_2$, $B_2O_3$, $P_2O_5$. L'alumine $\beta$ susceptible de former l'électrolyte répond à la formule ($11Al_2O_3 + \delta Na_2O$) ($1 \leq n \leq 2$).

Après le premier cycle charge-décharge de la batterie assemblée, l'électrolyte céramique contient en outre un sel du cation $E^+$. Les cations $E^+$ proviennent au moins en partie du sel sacrificiel qui se trouve dans le matériau d'électrode positive lors de l'élaboration de la batterie. Les cations $E^+$ peuvent également provenir d'un sel du cation $E^+$ ajouté au matériau destiné à former le second électrolyte lors de son élaboration lors de l'élaboration de la batterie.

L'électrode positive d'une batterie à électrolyte céramique peut être constituée par un mélange de matière active, et d'un matériau carboné agissant en tant qu'agent de conduction électronique déposé sur un collecteur de courant.

La matière active est choisie parmi le soufre, les sulfures de sodium $Na_2S_n$ ($1 \leq n \leq 6$), les dithiocarbamates $Na[CS_2NR'R'']$ dans lesquels chacun des groupes R' et R" représente un radical méthyle, éthyle, ou propyle, ou bien R' et R" formant un cycle (par exemple la pyrrolidine ou la morpholine).

Lorsque le matériau de l'électrode positive est solide durant le fonctionnement de la batterie, il est souhaitable d'ajouter au compartiment de l'électrode positive, un second électrolyte constitué par un sel de sodium en solution dans un solvant liquide ou polymère et destiné à améliorer les contacts. Le sel du second électrolyte peut être choisi parmi le chloroaluminate de sodium $NaAlCl_4$, les dithiocarbamates de sodium $Na[CS_2NR'R'']$ dans lesquels chacun des groupes R' et R" représente un radical méthyle, éthyle, ou propyle, ou bien R' et R" forment ensemble un cycle (par exemple la pyrrolidine ou la morpholine). Ces électrolytes fonctionnent au dessus de leur température de fusion, entre 100 et 300°C. Lorsque le second électrolyte contient un solvant polymère, on préfère un polymère contenant au moins 60% d'unités $[CH_2CH_2O]$, dans lequel le sel peut être au moins partiellement dissous.

Le matériau carboné de l'électrode positive est, de préférence, constitué par des fibres de carbone ou un feutre de carbone qui peuvent agir également en tant que collecteur de courant.

La matière active de l'électrode négative est du sodium métallique, sur un collecteur de courant. Le collecteur de courant de l'électrode négative est de préférence de l'acier sous une forme finement divisée (par exemple de la paille d'acier), cette forme permettant de limiter le flux de sodium en cas de rupture de la batterie, en particulier de la céramique formant l'électrolyte.

L'un des avantages de l'invention réside dans l'utilisation simple des sels sacrificiels qui sont stables dans l'atmosphère ordinaire ou dans les conditions mises en oeuvre lors de la fabrication des batteries qui fonctionnent par circulation d'ions lithium ou sodium dans une atmosphère anhydre dont le point de rosée est de 0°C à -100 °C.

Pour les batteries autres que les batteries à électrolyte céramique dites "sodium-soufre", un autre avantage de l'invention réside dans le fait que l'oxydation du sel sacrificiel qui a lieu durant la 1ère charge de la batterie crée une porosité dans le matériau composite de l'électrode positive, ledit matériau contenant, lors du montage de la batterie, la matière active d'électrode positive, le sel sacrificiel, un agent de conduction électronique et éventuellement un liant polymère. Une porosité contrôlée est très importante pour assurer des cinétiques rapides d'électrodes, donc une puissance soutenue de la batterie. Dans les batteries selon l'invention (autres que les batteries dites "sodium-soufre"), l'espace libéré par la disparition du sel sacrificiel par oxydation est rempli par l'électrolyte qui sert de réservoir à ions alcalins nécessaire du fait de l'appauvrissement au cours du fonctionnement résultant de la mobilité des anions. En effet, le bilan matière dans un électrolyte dont la conduction est due à la fois aux cations et aux anions, et dont les électrodes n'échangent avec l'électrolyte que des cations $Li^+$ et $Na^+$, montre que le compartiment de l'électrode positive s'appauvrit en sels de Li ou Na. Il est donc nécessaire de disposer d'une porosité importante, remplie d'électrolyte et capable de fournir les quantités de sel requises.

La présente invention est illustrée plus en détail par les exemples suivants, auxquels elle n'est cependant pas limitée.

**Exemple 1**

Dans un évaporateur rotatif, on a évaporé à siccité une solution aqueuse à 20% d'azoture de lithium commercialisée par la société Aldrich®, et l'on a obtenu une poudre cristalline incolore de $LiN_3$. Dans un mortier en agate, on a mélangé 100 mg de $LiN_3$ et 30 mg de carbone SP commercialisé par la société TIMCAL.

Dans une cellule électrochimique de type Swagelok® avec un passage latéral pour une électrode de référence, on a monté une électrode de travail constituée par 10 mg d'un mélange $LiN_3$ (7,7 mg) + carbone (2,3 mg), une électrode négative constituée par du lithium métallique, et une électrode de référence constituée par un fil d'argent. On a introduit en tant qu'électrolyte, une solution commerciale de $LiPF_6$ 1M dans un mélange carbonate d'éthylène / carbonate de diméthyle (50/50 en poids). On a appliqué un courant constant à la cellule (421 $\mu$A) entre l'électrode de travail et la contre-électrode, calculé de manière à permettre l'extraction d'un équivalent lithium du mélange $LiN_3$ + carbone en dix heures. On a enregistré la variation de la différence de potentiel entre l'électrode de travail et l'électrode de référence ($E_{we}$-$E_{ref}$ en fonction du temps, et elle est représentée par la courbe a) de la figure 1 sur laquelle $E_{we}$- $E_{ref}$ (en V) est représenté en ordonnée, et le temps T (en heures) est donné en abscisse.

**Exemple 2**

A une solution de 3,60 g du sel de sodium de l'acide mésoxalique (commercialisé par la société Fluka) dans 50 ml l'alcool éthylique à 95%, on a ajouté progressivement 1,96 g d'acide sulfurique pur dilué dans 5 ml de trifluoroéthanol. On a ensuite agité le mélange pendant 4 heures, puis on l'a centrifugé. À la solution surnageante obtenue après centrifugation, on a ajouté 1,85 g d'hydroxyde de lithium monolrydraté commercial. On a maintenu le mélange sous agitation à l'abri de l'air pendant 24 heures, puis on a centrifugé la solution laiteuse, et on l'a lavée trois fois avec 20 mL d'éthanol à 95%, puis séchée sous vide. On a récupéré 2,72 g de dilrydroxymalonate de lithium $Li_2[CO_2C(OH)_2CO_2]$ (rendement : 92%), que l'on a chauffé à 150°C sous vide, ce qui a provoqué une perte de masse est de 22%, correspondant à la formation quantitative du cétomalonate $Li_2[CO_2COCO_2]$ dont la liaison centrale C=O est visible en IR à 1530-1900 $cm^{-1}$.

On a mélangé 100 mg de cétomalonate $Li_2[CO_2COCO_2]$ avec 30 mg de Ketjen Black 600® et on a co-broyé le mélange dans un mortier pendant 5 minutes pour obtenir un mélange homogène.

Dans une cellule électrochimique de type Swagelok® similaire à celle de l'exemple 1, on a monté une électrode de travail constituée par 1,95 g dudit mélange homogène, et on a appliqué un courant constant de 30,6 $\mu$A à la cellule entre l'électrode de travail et la contre-électrode, ledit courant permettant l'extraction d'un équivalent lithium du mélange $Li_2[CO_2COCO_2]$ + carbone en dix heures. On a enregistré la variation de la différence de potentiel entre l'électrode de travail et l'électrode de référence ($E_{we}$-$E_{ref}$) en fonction du temps, et elle est représentée par la courbe b) de la figure 1.

**Exemple 3**

On a mis 3,15 g d'acide dilrydroxyfumarique commercialisé par la société Aldrich® en suspension dans 25 ml d'éthanol absolu et on a ajouté 7,2 g de tribromure de pyridinium commercial. À la suspension légèrement jaune ainsi obtenue, on a ajouté 2,4 g d'acétate de lithium dilrydraté. Après centrifugation, on a lavé la suspension deux fois par 25 mL d'éthanol anhydre, puis on a ajouté 2 g d'hydroxyde de lithium monolrydraté dans 25 ml d'éthanol à 95%. Ensuite, le mélange a été maintenu sous agitation à l'abri de l'air pendant 24 heures, la solution laiteuse obtenue a été centrifugée, lavée par trois portions de 20 mL d'éthanol à 95%, puis séchée sous vide. On a obtenu 3,3 g (rendement 85%) de dilrydroxytartrate de lithium $Li_2[CO_2C(OH)_2C(OH)_2CO_2]$ que l'on a chauffé sous vide à 150°C, ce qui a provoqué une perte de masse est de 18% correspondant à la formation quantitative de dicétosuccinate de Li anhydre $Li_2[CO_2C(=O)C(=O)CO_2]$ dont les liaisons centrales C=O sont visibles en IR à 1530-1900 $cm^{-1}$.

On a mélangé 100 mg de dicétosuccinate $Li_2[CO_2COCOC0_2]$ avec 30 mg de Ketjen Black 600® et on a co-broyé le mélange dans un mortier pendant 5 minutes pour obtenir un mélange homogène.

Dans une cellule électrochimique de type Swagelok® similaire à celle de l'exemple 1, on a monté une électrode de travail constituée par 3 mg dudit mélange homogène, et on a appliqué un courant constant de 40 $\mu$A à la cellule entre l'électrode de travail et la contre-électrode, ledit courant permettant l'extraction d'un équivalent lithium du mélange $Li_2[CO_2COCOC0_2]$+ carbone en dix heures. On a enregistré la variation de la différence de potentiel entre l'électrode de travail et l'électrode de référence ($E_{we}$-$E_{ref}$) en fonction du temps, et elle est représentée par la courbe c) de la figure 1.

**Exemple 4**

On a mis 2,36 g d'oxalyl dihydrazide commercial $(CONHNH_2)_2$ en suspension dans 20 mL de carbonate de propylène et on a ajouté 3mL de pyridine anhydre. A cette suspension, on a ajouté goutte à goutte sous agitation magnétique 2,54 g de chlorure d'oxalyle dilué dans 5 mL de carbonate de propylène. Un dégagement de chaleur signale la formation du polyhydrazide $[CONHNHCO]_n$ sous forme d'une suspension jaune clair. Le précipité de Polyhydrazide formé dans la suspension est séparé par centrifugation, puis lavé par 3×20 mL d'eau, puis par 2×10 mL d'éther éthylique, et séché sous vide. Dans une boîte à gant sous argon, on a mis en suspension 1 g de polymère $[CONHNHCO]_n$ dans le méthanol anhydre, on a ajouté 1,2 g de méthoxyde de lithium, on a maintenu la suspension sous agitation pendant 24 heures. Le changement de couleur jaune vif observé correspond à la formation du polymère $[CON(Li)N(Li)CO]_n$ que l'on isole par centrifugation et séchage sous atmosphère neutre.

On a mélangé 100 mg de polymère $[CON(Li)N(Li)CO]_n$ avec 30 mg de Ketjen Black 600® et on a co-broyé le mélange dans un mortier pendant 5 minutes pour obtenir un mélange homogène.

Dans une cellule électrochimique de type Swagelok® similaire à celle de l'exemple 1, on a monté une électrode de travail constituée par 3,3 mg dudit mélange homogène, et on a appliqué un courant constant de 68 $\mu$A à la cellule entre

l'électrode de travail et la contre-électrode, ledit courant permettant l'extraction d'un équivalent lithium du mélange $[CON(Li)N(Li)CO]_n$ + carbone en dix heures. On a enregistré la variation de la différence de potentiel entre l'électrode de travail et l'électrode de référence ($E_{we}$-$E_{ref}$) en fonction du temps, et elle est représentée par la courbe d) de la figure 1.

La figure 1 montre que les sels sacrificiels utilisés dans les exemples 1 à 4 sont actifs à leur capacité théorique.

**Exemple 5**

Dans un premier mode de réalisation, on a fait réagir 2,703 g de dibenzyl-carbonyl hydrazide $CO[N(CH_2C_6H_5)NH_2]_2$ avec 1,63 g de carbonyl-di-imidazole dans l'acétonitrile, puis on a introduit du Nickel de Raney dans le milieu réactionnel et on a soumis à un flux de $H_2$. On a ainsi obtenu la 1,4-dihydroxy-2,3,4,5-dihydrotétrazine. On a mis 1 g de 1,4-dilrydroxy-2,3,4,5-dilrydrotétrazine en suspension dans 7 mil de pyridine et on a ajouté 1 g de bromure de lithium et 2,54 g d'iode. Le sel de lithium de la 1-4-dilrydroxy-2,3,4,5-tétrazine qui a précipité a été séparé par centrifugation, lavé avec 5×10 mL d'acétonitrile, et séché sous vide.

Dans un autre mode de réalisation, (décrit par D. E. Chavez, M. A. Hiskey, R. D. Gilardi, Angew. Chem. 2000, 112, 1861 - 1863; Angew. Chem. Int. Ed. 2000, 39, 1791-1793), on a lrydrolysé 1g de 1,4-dichloro-1,3,5,6-tétrazine $C_2N_4Cl_2$ par 1,35 g de trimétlrylsilanoate de lithium dans 5 mL de DMF. Le précipité formé a été isolé par centrifugation, lavé par 5×10 mL de THF anhydre, puis séché.

Pour chacun des échantillons de $Li_2C_2O_2N_4$ ainsi préparés, on a préparé un mélange de $Li_2C_2O_2N_4$ et de Ketjen Black®, on a élaboré une cellule électrochimique selon le mode opératoire de l'exemple 1 et on l'a testée dans les conditions de l'exemple 1. La capacité spécifique obtenue au voltage final de 4 Volts vs. $Li^+/Li°$ est de 420 mAh/g, soit 95% de la valeur théorique.

**Exemple 6**

L'azoture de lithium préparé selon le mode opératoire de l'exemple 1 a été testé comme additif dans l'électrode positive d'une batterie.

On a mélangé 77,6 mg de $LiMn_2O4$, 10 mg de carbone Ketjen black® et 7,36 mg d'azoture de lithium et on a co-broyé dans un mortier pendant 5 min.

On a appliqué 20,7 mg du mélange homogène obtenu sur une extrémité d'un cylindre d'aluminium de 50 mm de longueur. On a monté l'électrode ainsi obtenue dans une cellule électrochimique de type Swagelok® similaire à celle de l'exemple 1, dans laquelle l'électrode positive est l'électrode de travail, la contre-électrode est une électrode de lithium et elle sert d'électrode de référence.

On a appliqué un courant constant de 28 μA à la cellule entre l'électrode de travail et la contre-électrode, ledit courant permettant l'extraction d'un équivalent lithium de la spinelle $LiMn_2O_4$ en dix heures. On a enregistré la variation de la différence de potentiel entre l'électrode de travail et la contre électrode ($E_{we}$-$E_{ce}$) noté $E_{we}$/V sur la figure 2, en fonction du temps. Le plateau correspondant à l'oxydation de $LiN_3$ est clairement visible à 3,7 Volts et correspond à l'addition de 20% de capacité supplémentaire visant à compenser la formation de le couche de passivation de l'électrode négative et les réactions parasites sur l'électrolyte au cours du premier cycle. Les cycles successifs montrent que le fonctionnement du matériau $LiMn_2O_4$ n'est pas affecté par la présence initiale de $LiN_3$.

**Exemple comparatif 1**

Le squarate de lithium est préparé par réaction dans un mélange eau-éthanol (50/50) à partir de quantités stœchiométriques d'acide squarique (dilrydroxycyclobutènedione) (11,40 g) et de carbonate de lithium (7,388 g). L'effervescence terminée laisse une solution incolore qui est évaporée et séchée sous vide à 50°C.

100 mg de squarate de lithium $Li_2C_4O_4$ mélangé à 30 mg de Ketjen Black 600® ont été co-broyés dans un mortier pendant 5 minutes pour obtenir un mélange homogène.

On a élaboré une cellule électrochimique de type Swagelok® analogue à celle de l'exemple 1, avec une électrode de travail constituée par 10 mg du mélange $Li_2C_4O_4$ + carbone. On a appliqué un courant constant à la cellule (93 μA) entre l'électrode de travail We et la contre-électrode Ce, calculé de manière à permettre l'extraction deux équivalents lithium du mélange $Li_2C_4O_4$ + carbone en trente cinq heures. Différentes mesures ont été effectuées dans le même temps, et les résultats sont représentés sur les figures 3 et 4.

La figure 3 représente la variation de l'impédance [Im(Z)/Ohm] imaginaire de la contre-électrode CE en fonction de la capacité réelle [Re(Z)/Ohm], déterminée toutes les 5 heures (de la courbe "a" à T=0, à la courbe "h" à T=35 heures).

La figure 4 représente l'évolution en fonction du temps T (en heures) :

- de la différence de potentiel entre l'électrode de travail et l'électrode de référence (courbe notée $E_{we}$) et de la différence de potentiel entre l'électrode de travail et la contre-électrode (courbe notée $E_{we}$-$E_{ce}$), par référence à l'échelle des ordonnées de gauche ;

- la différence de potentiel entre la contre-électrode et l'électrode de référence à l'échelle des ordonnées de droite (courbe notée $E_{ce}$), par référence à l'échelle des ordonnées de droite. Les impédances déduites de la figure 4 ont été reportées sur la courbe $E_{ce}$.

Les figures 3 et 4 montrent que la contre-électrode se polarise au cours de la réaction électrochimique et que son impédance (repères a ⇒ d) augmente d'un facteur 7. Ces mesures sont en accord avec le dépôt sur la contre-électrode négative des produits de réduction d'une espèce soluble dans l'électrolyte, à savoir le radical anion $C_4O_4$- •. Il en résulte que le composé $Li_2C_4O_4$ donne des radicaux anions $C_4O_4$- • solubles et n'est par conséquent pas utilisable en pratique comme sel sacrificiel.

Il en est de même pour d'autres oxocarbones, notamment $Li_2C_5O_5$ et $Li_2C_6O_6$, qui dans les mêmes circonstances, donnent respectivement des anions solubles $C_5O_5$ - • et $C_6O_6$ - •.

**Exemple 7**

Une batterie dite "sodium-ion" a été construite en assemblant une électrode négative, un électrolyte contenant un sel de sodium, et une électrode positive contenant un additif selon l'invention.

L'électrode négative est constituée par un collecteur de courant en aluminium (métal qui ne forme pas d'alliage avec le sodium) ayant une épaisseur de 25 μm.

L'électrolyte est un film ayant une épaisseur de 13 μm et constitué par une solution solide de 413 mg de $Na[CF_3(SO_2)_2N]$ dans 1,2 g d'un poly(oxyde d'éthylène) POE commercial de masse moyenne $5\times10^6$ dalton tel que le rapport "atomes d'oxygène du polyéther / ions sodium" soit de 20/1. Le film d'électrolyte est obtenu à partir d'une solution contenant 95% en poids d'acétonitrile et 5% en poids de mélange "POE + sel de sodium", ladite solution étant coulée directement sur le collecteur de courant formant l'électrode négative, puis séchée.

L'électrode positive est un film de matériau composite sur un collecteur de courant en aluminium. Le matériau composite est un mélange de 45% en poids $Na_2FePO_4F$, 15% en poids de $NaN_3$ commercial, 10% en poids de noir de carbone Ketjen Black 600• et 30% en poids d'une solution solide de $Na[CF_3(SO_2)_2N]$ dans un poly(oxyde d'éthylène) POE analogue à celle qui constitue l'électrolyte. Les constituants du matériau composite sont mis en suspension dans l'acétonitrile, la suspension est homogénéisée dans un broyeur à rouleaux pendant 24 heures, puis elle est épandue à l'aide d'un gabarit sur un film d'aluminium ayant une épaisseur de 25 μm (qui forme l'électrode négative), en une quantité telle que, après évaporation de l'acétonitrile, on obtienne une couche dense ayant une épaisseur de 80 μm.

L'électrode négative portant le film d'électrolyte et l'électrode positive sont assemblées par laminage à 80°C. La batterie ainsi obtenue est séchée sous vide à 70°C et enfermée à l'abri de l'air dans une enveloppe du type "métalloplastique" et munie d'entrées et de sorties des amenées de courant positives et négatives, ainsi que de moyens permettant l'évacuation des gaz formés lors du fonctionnement de la batterie. Ensuite l'enveloppe est scellée.

Pour le 1er cycle de fonctionnement :

- l'enceinte enfermant la batterie est mise sous vide, la batterie est maintenue à 70°C, et chargée avec une densité de courant de 100 $\mu A\cdot cm^{-2}$ jusqu'au potentiel de coupure haute de 3,8 V, ce qui correspond à une capacité de 9,8 $mAh\cdot cm^{-}2$. L'azote formé lors de la première charge est évacué, et l'enceinte est scellée à nouveau.

- la batterie est déchargée sous la même densité de courant de 100 $\mu A\cdot cm^{-2}$ entre 3,8 et 2V. La capacité surfacique mesurée est de 4 $mAh\cdot cm^{-2}$ ce qui, compte tenu de la masse de fluorophosphate de Li et Fe utilisée (11 $mg/cm^2$), correspond à capacité massique de 86% de la capacité théorique (qui est de 128 $mAh.g^{-1}$) attendue de la masse de $Na_2FePo_4F$.

On a soumis la batterie à 50 cycles de fonctionnement avec une densité de courant de 100 $\mu A\cdot cm^{-2}$, puis on l'a démontée dans une boîte à gants sous argon. On a constaté la présence d'un film de sodium sur le collecteur d'aluminium formant l'électrode négative, cette surcapacité venant de la décomposition de l'azoture de sodium.

**Exemple 8**

On a assemblé une batterie dite "Sodium/Soufre" qui comprend les éléments suivants :

- un conteneur en acier au molybdène de 4 cm de diamètre intérieur ;

- un tube d'alumine béta (11 $Al_2O_3$, 1,1 $Na_2O$) de 1,5 cm de diamètre extérieur, placé à l'intérieur du conteneur en acier, le conteneur et le tube étant concentriques ;

- dans l'espace annulaire entre le conteneur et le tube : un mélange compacté constitué par 55% en poids de tétrasulfure de sodium commercial $Na_2S_4$ sec, 35% en poids d'azoture de sodium $NaN_3$, et 10% en poids de fibres de carbone ayant un diamètre moyen de 3 μm et une longueur de 5 mm, ledit mélange compacté formant l'électrode positive ;

- dans le tube d'alumine béta : de la paille d'acier au préalable dégraissée et traitée sous un mélange hydrogène-azote (10% $H_2$) à 600°C pendant une heure, la paille d'acier occupant ≈ 10 % du volume intérieur du tube, ladite paille d'acier formant l'électrode négative.

La batterie est rendue étanche par ajustement d'un couvercle d'acier au molybdène comprenant un tube muni d'une valve et elle reliée à une pompe à vide primaire. Elle est chauffée à 300°C avec une montée en température de ≈ 1°C par minute, afin de provoquer le départ progressif de l'azote pour former un mélange liquide de $Na_2S_3$ et de $Na_2S_2$ dans l'espace annulaire, ledit mélange formant le matériau de cathode. Ensuite, la batterie est chargée à 330°C sous un courant de 10 mA·cm$^{-2}$ jusqu'au potentiel de 2,8 V qui correspond à l'extraction de tout le sodium du matériau de cathode. Cette faible densité de courant initiale permet d'accéder à toute l'activité électrochimique du mélange $Na_2S_3$ et $Na_2S_2$ qui est partiellement solide à cause de la présence de $Na_2S_2$ qui est faiblement soluble dans $Na_2S_3$ fondu à 330°C.

La batterie peut être cyclée entre 2,8 V et 2,1 Volts ($S_8 \Leftrightarrow Na_2S_3$) avec une densité de courant de 200 mA·cm$^{-2}$ sans perte de capacité appréciable sur 600 cycles.

**Exemple 9**

On a élaboré une électrode de la manière suivante. On a préparé une suspension dans la N-métlrylpyrrolidinone (NMP) d'azoture de lithium, de carbone SP®, de dioxyde de manganèse de type béta et de poly(fluorure de vinylidène dans les rapport massiques 0,36/0,16/0,27/0.21. Après dissolution du polymère, on a coulé la suspension visqueuse obtenue sur une plaque de verre, puis on a évaporé le solvant. Le film a été décollé du verre.

On a assemblé une batterie lithium/air constituée par une électrode négative de lithium, un électrolyte liquide constitué par une solution 1M de $LiPF_6$ dans un mélange équimassique de carbonate d'éthylène et de carbonate de méthyle, et une partie du film obtenu après séparation de la plaque de verre en tant qu'électrode positive.

La figure 5 représente pour le premier cycle d'oxydation, le voltage (en Volts) en fonction du temps (en heures), pour deux échantillons découpés dans le film obtenu ci-dessus. La capacité observée est celle attendue de la décomposition du sel sacrificiel.

La courbe (a) représente le potentiel de l'électrode positive où a lieu l'oxydation du sel sacrificiel, en fonction du temps, le courant de 112 $\mu$A.cm$^{-2}$ étant calculé pour extraire un équivalent lithium en 10 heures.

La courbe (b) représente la courbe de première décharge après l'oxydation du sel sacrificiel.

La courbe (c) représente le potentiel de la contre-électrode de lithium.

La figure 6 est une micrographie obtenue par microscopie électronique à balayage qui représente le matériau d'électrode positive après cyclage. Elle montre les pores qui se sont formés lors de la décomposition du sel sacrificiel, lesdits pore permettant à l'oxygène de pénétrer dans la batterie et d'accéder à l'électrode négative de lithium.

**Revendications**

1. Procédé d'élaboration d'une batterie qui fonctionne par circulation d'ions $A^+$ choisis parmi $Li^+$ et $Na^+$, ledit procédé consistant à assembler une électrode négative, une électrode positive et un électrolyte, puis à soumettre l'assemblage à une première charge à la température de fonctionnement de la batterie dans laquelle :

   - l'électrolyte est un matériau dans lequel les cations $A^+$ sont mobiles, choisi parmi les céramiques et les solutions d'un sel de $A^+$ dans un liquide polaire, un polymère ou leurs mélanges ;
   - la matière active de l'électrode négative est un matériau qui possède un couple rédox dont le potentiel est de 0 V à 1,6 V par rapport au couple $A^+/A°$, choisi parmi le métal A, les alliages et les composés intermétalliques du métal A, et les matériaux capables de libérer de manière réversible des cations $A^+$ ;
   - la matière active de l'électrode positive est un matériau qui possède un couple rédox dont le potentiel est supérieur à celui du couple de l'électrode négative, et qui est capable, de manière réversible, soit d'insérer des cations $A^+$, soit de réagir avec les cations $A^+$,

   ledit procédé étant **caractérisé en ce que** l'électrode positive utilisée lors de l'assemblage est constituée par un matériau composite d'électrode et un collecteur de courant, ledit matériau composite contenant ladite matière active d'électrode positive et au moins un sel dit "sel sacrificiel" dont le cation $E^+$ est choisi parmi $Li^+$, $Na^+$, $K^+$ et les cations onium, et l'anion est un anion rédox choisi parmi les anions azoture, les anions cétocarboxylate, et les anions hydrazide éventuellement sous forme polymère, ledit sel sacrificiel ayant un couple rédox à un potentiel supérieur au potentiel du couple rédox de matière active de l'électrode négative.

**2.** Procédé selon la revendication 1, **caractérisé en ce que** le potentiel du couple rédox du sel sacrificiel est dans l'intervalle de 2,0 V à 4,6 V.

**3.** Procédé selon la revendication 1, **caractérisé en ce que** le sel sacrificiel est un sel qui est liquide à la température normale ou à une température inférieure à 100°C.

**4.** Procédé selon la revendication 3, **caractérisé en ce que** le cation onium est choisi parmi les cations alkyl-métlryl-imidazolium, alkyl-métlryl-pyrrolidinium, et alkyl-trimétlryl-ammonium dans lesquels le groupe alkyle a de 2 à 8 atomes de carbone.

**5.** Procédé selon la revendication 1, **caractérisé en ce que** l'électrolyte utilisé lors de l'assemblage comprend au moins un sel de A en solution dans un solvant.

**6.** Procédé selon la revendication 5, **caractérisé en ce que** :

- le sel de $A^+$ de l'électrolyte est choisi parmi les sels d'un anion répondant à l'une des formules suivantes : $ClO_4^-$, $BF_4^-$, $PF_6^-$, $AsF_6^-$, $SbF_6^-$, $SCN^-$, $R_FSO_3^-$, $[(R_FSO_2)NSO_2R'_F]^-$, $[(R_FSO_2)C(Y)SO_2R_F']^-$ dans laquelle Y est CN ou $SO_2R_F''$, $[R_FSO_2(NCN)]^-$ $[R_FSO_2\{C(CN)_2\}^-$, 2-perfluoroalkyl-4,5-dicyanoimidazole $[R_FC_5N_4]^-$, 4,5-dicyano-1,2,3-triazole $[C_4N_5]^-$, 2,5-bis(fluorosulfonyl)-1,3,4-triazole $[C_2F_2S_2O_4]^-$, et 3-cyano-5-perfluoroalkyle-1,3,4-triazole $[R_FC_3N_4]^-$, $R_F$, $R_F'$ et $R_F''$ étant des groupes alkyle dans lesquels au moins 60 % des atomes d'hydrogène sont remplacés par des atomes de fluor.
- le solvant de l'électrolyte est un solvant liquide éventuellement gélifié par addition d'un polymère, ou un solvant polymère éventuellement plastifié par un solvant liquide.

**7.** Procédé selon la revendication 5, **caractérisé en ce que** l'électrode positive utilisée lors de l'assemblage est constituée par un collecteur de courant portant une matière composite d'électrode comprenant de 5 à 95% en poids de matière active d'électrode positive, de 0,1 à 30% en poids d'un agent de conduction électronique, de 5 à 70% en poids d'au moins un sel sacrificiel et de 0 à 25% en poids d'un liant.

**8.** Procédé selon la revendication 7, pour l'élaboration d'une batterie dans laquelle A est Li, **caractérisé en ce que** la matière active de l'électrode positive est un matériau capable d'insérer des ions lithium de manière réversible, choisi parmi :

- les chalcogénures de métaux de transition, en particulier les oxydes $Li_xT^aO_2$ dans lesquels $0 \leq x \leq 1$ et $T^a$ représente au moins un élément choisi parmi Co, Ni et Mn, dont une partie peut être replacée par Mg ou Al ;
- les phosphates de structure olivine $Li_xT^bPO_4$, $0 \leq x \leq 1$, dans lesquels $T^b$ représente au moins un élément choisi parmi Fe et Mn, dont une partie peut être remplacée par Co, Ni ou Mg ;
- les silicates $Li_{2-x}T^cSiO_4$, et les fluorophosphates $Li_xT^cPO_4F$ dans lesquels $T^c$ représente au moins un élément choisi parmi Fe, Mn, Co, Ni, et Ti, dont une partie peut être remplacée par Mg ou Al ;
- les fluorosulfates $Li_xT^dSO_4F$ dans lesquels $T^d$ représente au moins un élément choisi parmi Fe, Mn, Co, et Ni, dont une partie peut être remplacée par Mg et une partie des groupement sulfates $SO_4^{2-}$ peut être remplacés par le groupement iso-stère et iso-charge $PO_3F^{2-}$ ;
- les polysulfures $Li_2S_n$ $1 \leq n \leq 6$, les sels de lithium du dimercaptothiadiazole et du dimercaptooxazole.

**9.** Procédé selon la revendication 5, pour l'élaboration d'une batterie dans laquelle A est Li, **caractérisé en ce que** l'électrode positive utilisée lors de l'assemblage comprend de 5 à 95% en poids de sel sacrificiel, de 1 à 60% de carbone et de 0 à 20% en poids de $MnO_2$.

**10.** Procédé selon la revendication 7, pour l'élaboration d'une batterie dans laquelle A est Na, **caractérisé en ce que** la matière active de l'électrode positive est un matériau capable d'insérer des ions lithium de manière réversible, choisi parmi :

- les fluorophosphates lamellaires $Na_2TPO_4F$ dans lesquels T représente un élément divalent choisi parmi Fe, Mn, Co, et Ni, qui peuvent être remplacés partiellement par Mg ou Zn,
- les fluorosulfates $NaT'SO_4F$ dans lesquels T' représente au moins un élément choisi parmi Fe, Mn, Co et Ni, dont une partie est éventuellement remplacée par Mg et une partie des groupements sulfates $SO_4^{2-}$ est éventuellement remplacée par le groupement iso-stère et iso-charge $PO_3F^{2-}$;
- les polysulfures $Na_2S_n$ ($1 \leq n \leq 6$), et les sels de sodium du dimercaptothiadiazole et du dimercaptooxazole ;

- les dithiocarbamates $Na[CS_2NR'R'']$ dans lesquels chacun des groupes R' et R" représente un radical méthyle, éthyle, ou propyle, ou bien R' et R" forment un cycle.

**11.** Procédé selon la revendication 1, pour l'élaboration d'une batterie dans laquelle A est Li, **caractérisé en ce que** l'électrode négative utilisée lors de l'assemblage est constituée par un collecteur de courant portant un matériau composite d'électrode comprenant une matière active d'électrode négative, éventuellement un agent de conduction électronique, et éventuellement un liant, ladite matière active d'électrode négative étant choisi parmi les carbones, les lithium avec Si ou Sn, les composés intermétalliques de lithium, le titanate de lithium $Li_4Ti_5O_{12}$ éventuellement dopé par Mg, le dioxyde de molybdène et le dioxyde de tungstène.

**12.** Procédé selon la revendication 1, pour l'élaboration d'une batterie dans laquelle A est Na, **caractérisé en ce que** l'électrode négative utilisée lors de l'assemblage est constituée par un collecteur de courant portant un matériau composite d'électrode comprenant une matière active d'électrode négative, éventuellement un agent de conduction électronique, et éventuellement un liant, ladite matière active d'électrode négative étant choisi parmi les carbones, les graphite naturels ou artificiels, les dicarboxylates de sodium, la ferrite de sodium $Na_xFeO_2$, les titanates de sodium et d'aluminium $Na_xTi_{1-z}Al_zO_2$ ($0 \leq x \leq 1$, $0 \leq z \leq 0{,}4$) de structure lamellaire, les alliages de sodium avec Sn ou Pb.

**13.** Procédé selon l'une des revendications 7, 11 ou 12, **caractérisé en ce que** l'agent de conduction électronique est un matériau carboné, choisi parmi les noirs de carbone, les noirs d'acétylène, les graphite naturels ou synthétiques, et les nanotubes de carbone.

**14.** Procédé selon la revendication 1, **caractérisé en ce que** l'électrolyte est une céramique choisie parmi l'alumine $\beta$, l'alumine $\beta''$, les phosphosilicates de structure Nasicon, et les verres à base de $Na_2O$ et d'au moins un oxyde formateur choisi parmi $SiO_2$, $B_2O_3$, $P_2O_5$.

**15.** Procédé selon la revendication 14, **caractérisé en ce que** le matériau de l'électrode positive est solide durant le fonctionnement de la batterie et que le compartiment de l'électrode positive contient un second électrolyte constitué par un sel de sodium en solution dans un solvant liquide ou polymère, ledit sel étant choisi parmi le chloroaluminate de sodium $NaAlCl_4$, les dithiocarbamates de sodium $Na[CS_2NR'R'']$ dans lesquels chacun des groupes R' et R" représente un radical méthyle, éthyle, ou propyle, ou bien R' et R" forment ensemble un cycle.

## Patentansprüche

**1.** Verfahren zur Herstellung einer Batterie, die durch Zirkulation von $A^+$-Ionen arbeitet, die aus $Li^+$ und $Na^+$ ausgewählt sind, wobei das Verfahren darin besteht, eine negative Elektrode, eine positive Elektrode und ein Elektrolyt zu kombinieren und dann die Montage einer ersten Ladung bei Betriebstemperatur der Batterie auszusetzen, wobei:

- der Elektrolyt ein Material ist, bei dem die $A^+$-Kationen beweglich sind, ausgewählt aus den Keramiken und den Lösungen eines Salzes von $A^+$ in einer polaren Flüssigkeit, einem Polymer oder ihren Gemischen,
- die aktiv Substanz der negativen Elektrode ein Material ist, das ein Redoxpaar besitzt, dessen Potential von 0 V bis 1 ,6 V im Verhältnis zum Paar $A^+/A°$ ist, ausgewählt aus dem Metall A, den Legierungen und den intermetallischen Verbindungen des Metalls A und den Materialien, die imstande sind, $A^+$-Kationen reversibel freizusetzen,
- die aktive Substanz der positiven Elektrode ein Material ist, das ein Redoxpaar besitzt, dessen Potential höher ist als das Potential des Paars der negativen Elektrode und das imstande ist, $A^+$-Kationen reversibel entweder einzusetzen oder mit den $A^+$-Kationen zu reagieren,

wobei das Verfahren **dadurch gekennzeichnet ist, dass** die bei der Montage verwendete positive Elektrode aus einem ElektrodenVerbundmaterial und einem Stromsammler besteht, wobei das Verbundmaterial die aktive Substanz der positiven Elektrode und mindestens ein sogenanntes "Opfersalz" enthält, dessen Kation $E^+$ aus $Li^+$, $Na^+$, $K^+$ und den Oniumkationen ausgewählt ist, und das Anion ein Redoxanion ist, das aus den Azidanionen, den Cetocarboxylatanionen und den Hydrazidanionen, eventuell in Polymerform, ausgewählt ist, wobei das Opfersalz ein Redoxpaar mit einem höheren Potential hat als das Potential des Redoxpaars der aktiven Substanz der negativen Elektrode.

**2.** Verfahren nach Anspruch 1, **dadurch gekennzeichnet, dass** das Potential des Redoxpaars des Opfersalzes im

Intervall von 2,0 V bis 4,6 V ist.

3. Verfahren nach Anspruch 1, **dadurch gekennzeichnet, dass** das Opfersalz ein Salz ist, das bei normaler Temperatur oder bei einer Temperatur unter 100 °C flüssig ist.

4. Verfahren nach Anspruch 3, **dadurch gekennzeichnet, dass** das Oniomkation aus den Alkylmethylimidazolium-, Alkylmethylpyrrolidinium- und Alkyltrimethylammonium-Kationen ausgewählt ist, wobei die Alkylgruppe 2 bis 8 Kohlenstoffatome hat.

5. Verfahren nach Anspruch 1, **dadurch gekennzeichnet, dass** der bei der Montage verwendete Elektrolyt mindestens ein in einem Lösungsmittel gelöstes Salz von A umfasst.

6. Verfahren nach Anspruch 5, **dadurch gekennzeichnet, dass**:

- das Salz von $A^+$ des Elektrolyts aus den Salzen eines Anions ausgewählt ist, das einer der folgenden Formeln entspricht: $ClO_4$-, $BF_4$-, $PF_6$-, $AsF_6$-, $SbF_6$-, SCN-, $R_FSO_3^-$, $[(R_FSO_2)NSO_2R'_F]^-$, $[(R_FSO_2)C(Y)SO_2R_F']^-$, wobei Y CN oder $SO_2R_F''$, $[R_FSO_2(NCN)]^-$, $[R_FSO_2\{C(CN)_2\}]^-$, 2-Perfluoralkyl-4,5-dicyanoimidazol $[R_FC_5N_4]^-$, 4,5-Dicyano-1,2,3-triazol $[C_4N_{5]}$-, 2,5-bis(fluorsulfonyl)-1,3,4-triazol $[C_2F_2S_2O_4]^-$ und 3-Cyan-5-perfluoralkyl-1,3,4-triazol $[R_FC_3N_4]^-$ ist, $R_F$, $R_F'$ und $R_F''$ Alkylgruppen sind, in denen mindestens 60 % der Wasserstoffatome durch Fluoratome ersetzt sind,
- das Lösungsmittel des Elektrolyts ein flüssiges, eventuell durch Hinzufügen von einem Polymer geliertes Lösungsmittel oder ein Polymerlösungsmittel, eventuell durch ein flüssiges Lösungsmittel plastifiziertes Lösungsmittel, ist.

7. Verfahren nach Anspruch 5, **dadurch gekennzeichnet, dass** die bei der Montage verwendete positive Elektrode aus einem Stromsammler besteht, der ein Elektrodenverbundmaterial trägt, das 5 bis 95 Gew.-% aktive Substanz positiver Elektrode, 0,1 bis 30 Gew.-% eines elektronischen Leitmittels, 5 bis 70 Gew.-% mindestens eines Opfersalzes und 0 bis 25 Gew.-% eines Bindemittels umfasst.

8. Verfahren nach Anspruch 7 zur Herstellung einer Batterie, bei der A Li ist, **dadurch gekennzeichnet, dass** die aktive Substanz der positiven Elektrode ein Material ist, das imstande ist, Lithiumionen reversibel einzusetzen, ausgewählt aus:

- den Übergangsmetall-Chalkogeniden, insbesondere den Oxiden $Li_xT^aO_2$, wobei $0 \leq x \leq 1$ ist und $T^a$ mindestens ein Element darstellt, das aus Co, Ni und Mn ausgewählt ist, wovon ein Teil durch Mg oder Al ersetzbar ist,
- den Phosphonaten mit Olivinstruktur $Li_xT^bPO_4$, $0 \leq x \leq 1$, wobei $T^b$ mindestens ein Element darstellt, das aus Fe und Mn ausgewählt ist, wovon ein Teil durch Co, Ni oder Mg ersetzbar ist,
- den Silikaten $Li_{2-x}T^cSiO_4$ und den Fluorphosphaten $Li_xT^cPO_4F$, wobei Tc mindestens ein Element darstellt, das aus Fe, Mn, Co, Ni und Ti ausgewählt ist, wovon ein Teil durch Mg oder Al ersetzbar ist,
- den Fluorphosphaten $Li_xT^dSO_4F$, wobei $T^d$ mindestens ein Element darstellt, das aus Fe, Mn, Co und Ni ausgewählt ist, wovon ein Teil durch Mg ersetzbar ist und ein Teil der Sulfatgruppen $SO_4^{2-}$ durch die Isoster- und Isolast-Gruppe $PO_3F^{2-}$ ersetzbar ist,
- den Polysulfiden $Li_2S_n$ $1 \leq n \leq 6$, den Lithiumsalzen des Dimercaptothiadiazols und des Dimercaptooxazols.

9. Verfahren nach Anspruch 5 zur Herstellung einer Batterie, bei der A Li ist, **dadurch gekennzeichnet, dass** die positive Elektrode, die bei der Montage verwendet wird, 5 bis 95 Gew.-% Opfersalz, 1 bis 60 % Kohlenstoff und 0 bis 20 Gew.-% $MnO_2$ umfasst.

10. Verfahren nach Anspruch 7 zur Herstellung einer Batterie, bei der A Na ist, **dadurch gekennzeichnet, dass** die aktive Substanz der positiven Elektrode ein Material ist, das imstande ist, Lithiumionen reversibel einzusetzen, auswählt aus:

- den lamellaren Fluorphosphaten $Na_2TPO_4F$, wobei T ein zweiwertiges Element darstellt, das aus Fe, Mn, Co und Ni ausgewählt ist, die teilweise durch Mg oder Zn ersetzbar sind,
- den Fluorphosphaten $NaT'SO_4F$, wobei T' mindestens ein Element darstellt, das aus Fe, Mn, Co und Ni ausgewählt ist, wovon ein Teil eventuell durch Mg ersetzt ist und ein Teil der Sulfatgruppen $SO_4^{2-}$ eventuell durch die Isoster- und Isolast-Gruppe $PO_3F^{2-}$ ersetzt ist,
- den Polysulfiden $Na_2S_n$ ($1 \leq n \leq 6$) und den Lithiumsalzen des Dimercaptothiadiazols und des Dimercaptooxa-

zols,
- den Dithiocarbamaten $Na[CS_2NR'R'']$, wobei jede der Gruppen R' und R" ein Methyl-, Ethyl- oder Propylradial darstellt oder R' und R" einen Ring bilden.

**11.** Verfahren nach Anspruch 1 für die Herstellung einer Batterie, bei der A Li ist, **dadurch gekennzeichnet, dass** die bei der Montage verwendete negative Elektrode aus einem Stromsammler besteht, der ein Elektrodenverbundmaterial trägt, das eine aktive Substanz negativer Elektrode, eventuell ein elektronisches Leitmittel und eventuell ein Bindemittel trägt, wobei die aktive Substanz negativer Elektrode aus den Kohlenstoffen, den natürlichen oder künstlichen Graphiten, den Lithiumdicarboxylaten, den Lithiumlegierungen mit Si oder Sn, den intermetallischen Lithiumverbindungen, dem Lithiumtitanat $Li_4Ti_5O_{12}$, eventuell dotiert durch Mg, dem Molybdändioxid und dem Wolframdioxid ausgewählt ist.

**12.** Verfahren nach Anspruch 1 für die Herstellung einer Batterie, bei der A Li ist, **dadurch gekennzeichnet, dass** die bei der Montage verwendete negative Elektrode aus einem Stromsammler besteht, der ein Elektrodenverbundmaterial trägt, das eine aktive Substanz negativer Elektrode, eventuell ein elektronisches Leitmittel und eventuell ein Bindemittel trägt, wobei die aktive Substanz negativer Elektrode aus den Kohlenstoffen, den natürlichen oder künstlichen Graphiten, den Natriumdicarboxylaten, dem Natriumferrit $Na_xFeO_2$, den Natrium- und Aluminiumtitanaten $Na_xTi_{1-z}Al_zO_2$ ($0 \leq x \leq 1$, $0 \leq z \leq 0{,}4$) lamellerer Struktur, den Natriumlegierungen mit Sn oder Pb ausgewählt ist.

**13.** Verfahren nach einem der Ansprüche 7, 11 oder 12, **dadurch gekennzeichnet, dass** das elektronische Leitmittel eine kohlenstoffhaltige Substanz ist, die aus den Rußen, den Acetylenrußen, den natürlichen oder synthetischen Graphiten und den Kohlenstoff-Nanoröhrchen ausgewählt ist.

**14.** Verfahren nach Anspruch 1, **dadurch gekennzeichnet, dass** der Elektrolyt eine Keramik ist, die aus dem β-Aluminat, dem β"-Aluminat, den Phosphorsilikaten mit Nasicon-Struktur und dem Glas auf der Basis von $Na_2O$ und mindestens einem Oxidbildner, ausgewählt aus $SiO_2$, $B_2O_3$, $P_2O_5$, ausgewählt ist.

**15.** Verfahren nach Anspruch 14, **dadurch gekennzeichnet, dass** die Substanz der positiven Elektrode beim dem Betrieb der Batterie fest ist und dass das Fach der positiven Elektrode ein zweites Elektrolyt enthält, das aus einem in einem flüssigen oder Polymerlösungsmittel gelösten Natriumsalz besteht, wobei das Salz aus dem Natriumchloraluminat $NaAlCl_4$, den Natriumdithiocarbamaten $Na[CS_2NR'R'']$ ausgewählt ist, wobei jede der Gruppen R' und R" ein Methyl-, Ethyl- oder Propylradial darstellt oder R' und R" gemeinsam einen Ring bilden.

## Claims

**1.** A method for producing a battery which operates by circulation of A+ ions selected from among $Li^+$ and $Na^+$, the said method consisting of assembling a negative electrode, a positive electrode and an electrolyte, and of subjecting the assembly to first charging at the operating temperature of the battery, wherein:

- the electrolyte is a material in which the $A^+$ cations are mobile, selected from among ceramics and solutions of an $A^+$ salt in a polar liquid, a polymer or the mixtures thereof;
- the active substance of the negative electrode is a material which has a redox couple having a potential of 0 V to 1.6 V relative to the $A^+/A°$ couple, selected from among metal A, the alloys and intermetallic compounds of metal A and materials capable of reversibly releasing $A^+$ cations;
- the active material of the positive electrode is a material which has a redox couple having a potential higher than the couple of the negative electrode, and is reversibly capable either of inserting $A^+$ cations or of reacting with $A^+$ cations,

the said method being **characterized in that** the positive electrode used during assembly is formed of a composite electrode material and a current collector, the said composite material containing the said active material of the positive electrode and at least one so-called "sacrificial" salt of which the $E^+$ cation is selected from among $Li^+$, $Na^+$, $K^+$ and onium cations, and the anion is a redox anion selected from among azide anions, keto carboxylate anions and hydrazide anions optionally in polymer form, the said sacrificial salt having a redox couple at a higher potential than the potential of the redox couple of the active material of the negative electrode.

**2.** The method according to claim 1, **characterized in that** the potential of redox couple of the sacrificial salt lies in the range of 2.0 V to 4.6 V.

3. The method according to claim 1, **characterized in that** the sacrificial salt is a salt which is liquid at normal temperature or at a temperature lower than 100°C.

4. The method according to claim 3, **characterized in that** the onium cation is selected from among alkyl-methyl-imidazolium, alkyl-methyl-pyrrolidinium and alkyl-trimethyl-ammonium cations wherein the alkyl group has 2 to 8 carbon atoms.

5. The method according to claim 1, **characterized in that** the electrolyte used during assembly comprises at least one salt of A in solution in a solvent.

6. The method according to claim 5, **characterized in that**:

- the $A^+$ salt of the electrolyte is selected from among the salts of an anion meeting one of the following formulas: $ClO_4^-$, $BF_4^-$, $PF_6^-$, $AsF_6^-$, $SbF_6^-$, SCN-, $R_FSO_3^-$, $[(R_FSO_2)NSO_2R'_F]^-$, $[(R_FSO_2)C(Y)SO_2R_F']$- wherein Y is CN or $SO_2R_F''$, $[(R_FSO_2(NCN)]^-$, $[R_FSO_2\{C(CN)_2\}]^-$, 2-perfluoroalkyl-4,5-dicyanoimidazole $[R_FC_5N_4]^-$, 4,5-dicyano-1,2,3-triazole $[C_4N_5]^-$, 2,5-bis(fluorosulfonyl)-1,3,4-triazole $[C_2F_2S_2O_4]^-$ and 3-cyano-5-perfluoroalkyl-1,3,4-triazole $[R_FC_3N_4]^-$, $R_F$, $R_F'$ and $R_F''$ being alkyl groups in which at least 60 % of the hydrogen atoms are replaced by fluorine atoms,
- the solvent of the electrolyte is a liquid solvent optionally gelled through the addition of a polymer, or a polymer solvent optionally plasticized by a liquid solvent.

7. The method according to claim 5, **characterized in that** the positive electrode used during assembly is formed of a current collector carrying a composite electrode material comprising 5 to 95 % by weight of active material of the positive electrode, 0.1 to 30 % by weight of an electronic conducting agent, 5 to 70 % by weight of at least one sacrificial salt and 0 to 25 % by weight of binder.

8. The method according to claim 7 to produce a battery wherein A is Li, **characterized in that** the active material of the positive electrode is a material capable of reversibly inserting lithium ions selected from among:

- the chalcogenides of transition metals, in particular the $Li_xT^aO_2$ oxides wherein $0 \leq x \leq 1$ and $T^a$ represents at least one element selected from among Co, Ni and Mn, part of which can be replaced by Mg or Al;
- the phosphates of olivine structure $Li_xT^bPO_4$, $0 \leq x \leq 1$ wherein $T^b$ represents at least one element selected from among Fe and Mn, part of which can be replaced by Co, Ni or Mg;
- the silicates $Li_{2-x}T^cSiO_4$ and fluorophosphates $Li_xT^cPO_4F$ wherein $T^c$ represents at least one element selected from among Fe, Mn, Co, Ni and Ti of which part can be replaced by Mg or Al;
- the fluorosulfates $Li_xT^dSO_4F$ wherein $T^d$ represents at least one element selected from among Fe, Mn, Co, Ni and Ti of which part can be replaced by Mg, and part of the sulfate groups $SO_4^{2-}$ can be replaced by the isostere and isocharge group $PO_3F^{2-}$;
- the polysulfides $Li_2S_n$, $1 \leq n \leq 6$, the lithium salts of dimercaptothiadiazole and dimercaptooxazole.

9. The method according to claim 5 to produce a battery in which A is Li, **characterized in that** the positive electrode used during assembly comprises 5 to 95 % by weight of sacrificial salt, 1 to 60 % carbon and 0 to 20 % by weight of $MnO_2$.

10. The method according to claim 7 to produce a battery in which A is Na, **characterized in that** the active material of the positive electrode is a material capable of reversibly inserting lithium ions selected from among:

- lamellar fluorophosphates $Na_2TPO_4F$ wherein T represents a divalent element selected from among Fe, Mn, Co and Ni which can be partly replaced by Mg or Zn;
- fluorosulfates $NaT'SO_4F$ wherein T' represents at least one element selected from among Fe, Mn, Co and Ni of which part is optionally replaced by Mg and part of the sulfate groups $SO_4^{2-}$ is optionally replaced by the isostere and isocharge group $PO_3F^{2-}$;
- polysulfides $Na2S_n$ ($1 \leq n \leq 6$) and the sodium salts of dimercaptothiadiazole and dimercaptooxazole;
- dithiocarbamates $Na[CS_2NR'R'']$ wherein each of the groups R' and R'' represents a methyl, ethyl or propyl radical, or else R' and R'' form a ring.

11. The method according to claim 1 to produce a battery wherein A is Li, **characterized in that** the negative electrode used during assembly is formed by a current collector carrying a composite electrode material comprising an active

material of negative electrode, optionally an electronic conducting agent, and optionally a binder, the said active material of negative electrode being selected from among carbons, natural or synthetic graphite, lithium dicarboxylates, lithium alloys with Si or Sn, intermetallic compounds of lithium, lithium titanate $Li_4Ti_5O_{12}$ optionally Mg-doped, molybdenum dioxide and tungsten dioxide.

**12.** The method according to claim 1 to produce a battery wherein A is Na, **characterized in that** the negative electrode used during assembly is formed by a current collector carrying a composite electrode material comprising an active material of negative electrode, optionally an electronic conducting agent and optionally a binder, the said active material of negative electrode being selected from among carbons, natural or artificial graphite, sodium dicarboxylates, sodium ferrite $Na_xFeO_2$, sodium and aluminium titanates $Na_xTi_{1-z}Al_zO_2$ ($0 \leq x \leq 1$, $0 \leq Z \leq 0.4$) of lamellar structure, sodium alloys with Sn or Pb.

**13.** The method according to one of claims 7, 11 or 12, **characterized in that** the electronic conducting agent is a carbon material selected from among carbon blacks, acetylene blacks, natural or synthetic graphite and carbon nanotubes.

**14.** The method according to claim 1 **characterized in that** the electrolyte is a ceramic selected from among β alumina, β" alumina, phosphosilicates of Nasicon structure, $Na_2O$ glasses and at least one forming oxide forming agent selected from among $SiO_2$, $B_2O_3$, $P_2O_5$.

**15.** The method according to claim 14, **characterized in that** the material of the positive electrode is solid during the operation of the battery, and that the compartment of the positive electrode contains a second electrolyte formed of a sodium salt in solution in a liquid or polymer solvent, the said salt being selected from among sodium chloroaluminate $NaAlCl_4$, sodium dithiocarbamates $Na[CS_2NR'R'']$ wherein each of the groups R' and R" represents a methyl, ethyl or propyl radical, or else R' and R" together form a ring.

FIG. 1

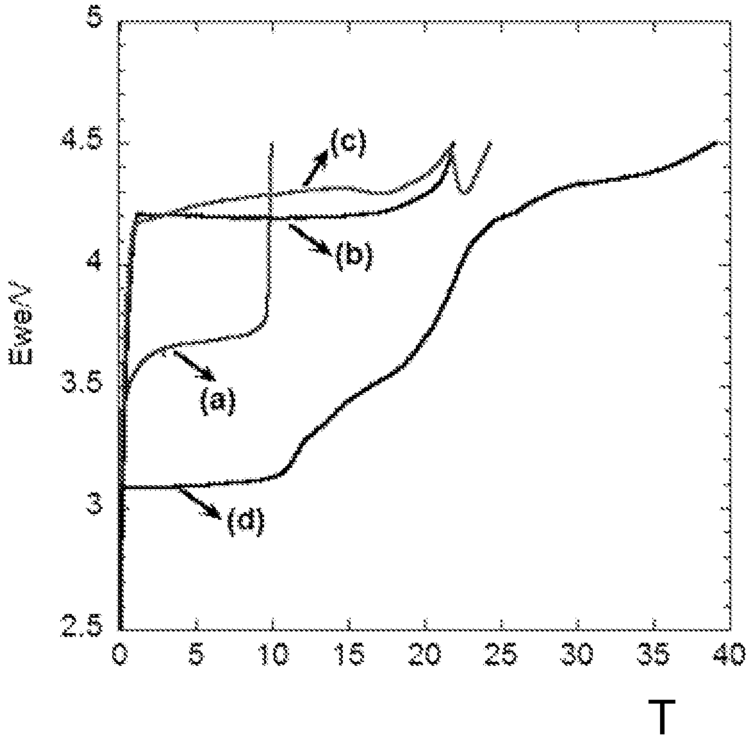
5
4.5
4
3.5
3
2.5
Ewe/V
(a)
(b)
(c)
(d)
0
5
10
15
20
25
30
35
40
T

FIG. 2

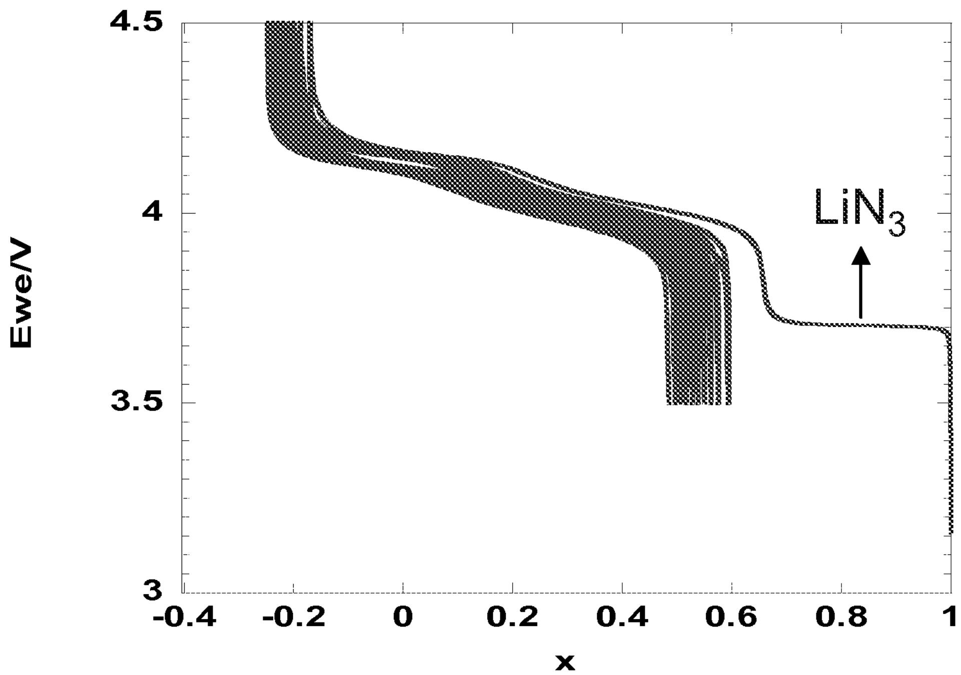
4.5
4
3.5
3
Ewe/V
LiN3
-0.4
-0.2
0
0.2
0.4
0.6
0.8
1
x

FIG. 3

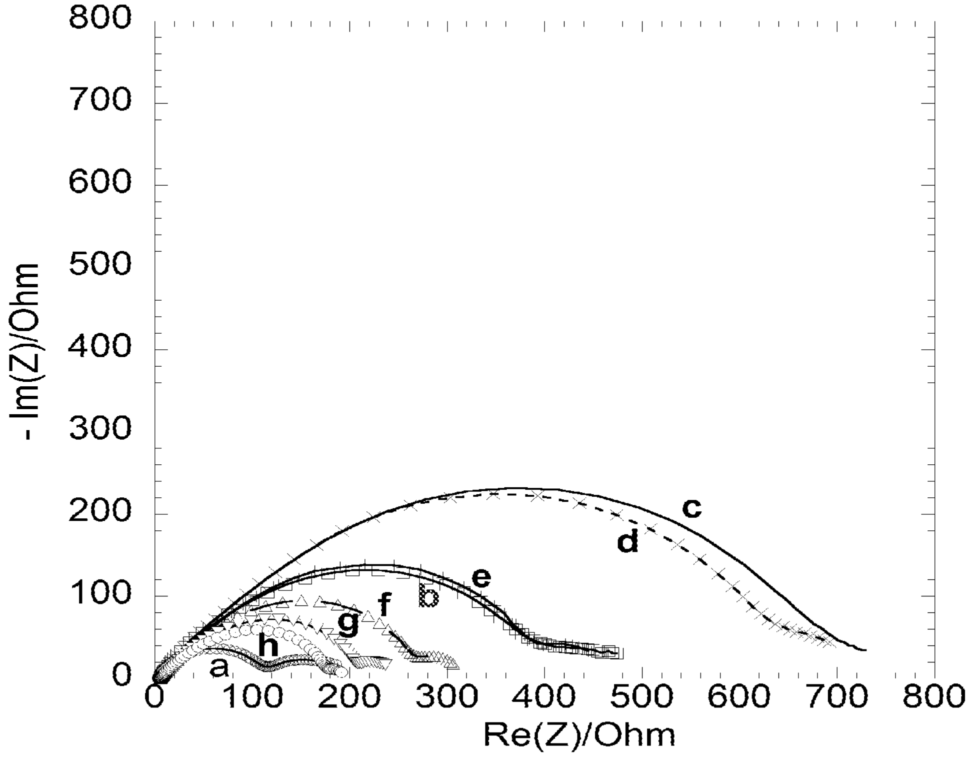
- Im(Z)/Ohm
Re(Z)/Ohm
0
100
200
300
400
500
600
700
800
a
b
c
d
e
f
g
h

FIG. 4

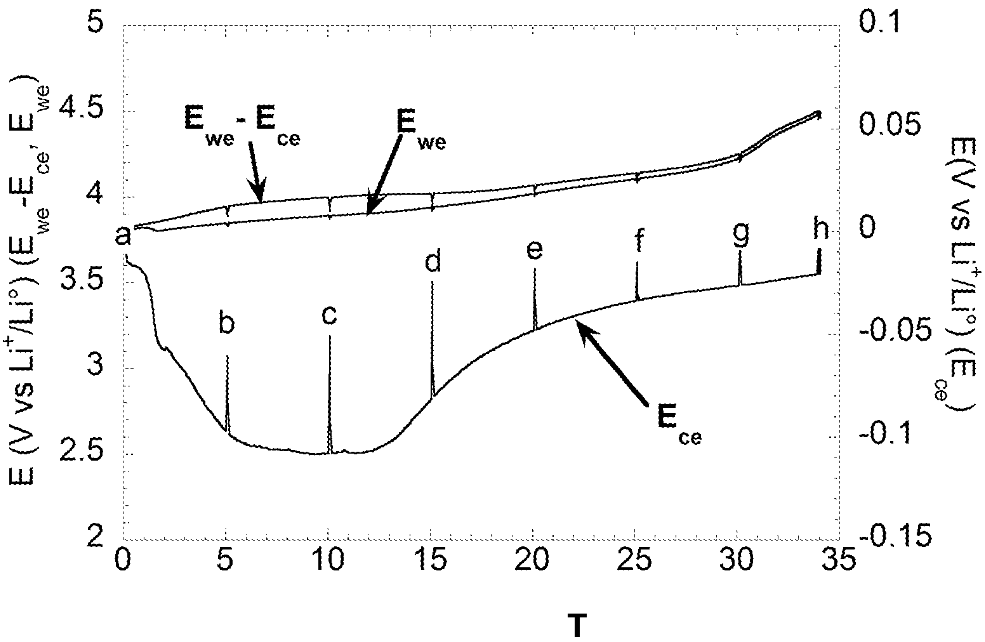
E (V vs Li+/Li°) (Ewe-Ece, Ewe)
E(V vs Li+/Li°) (Ece)
T
Ewe - Ece
Ewe
Ece
a
b
c
d
e
f
g
h
5
4.5
4
3.5
3
2.5
2
0.1
0.05
0
-0.05
-0.1
-0.15
0
5
10
15
20
25
30
35

FIG. 5

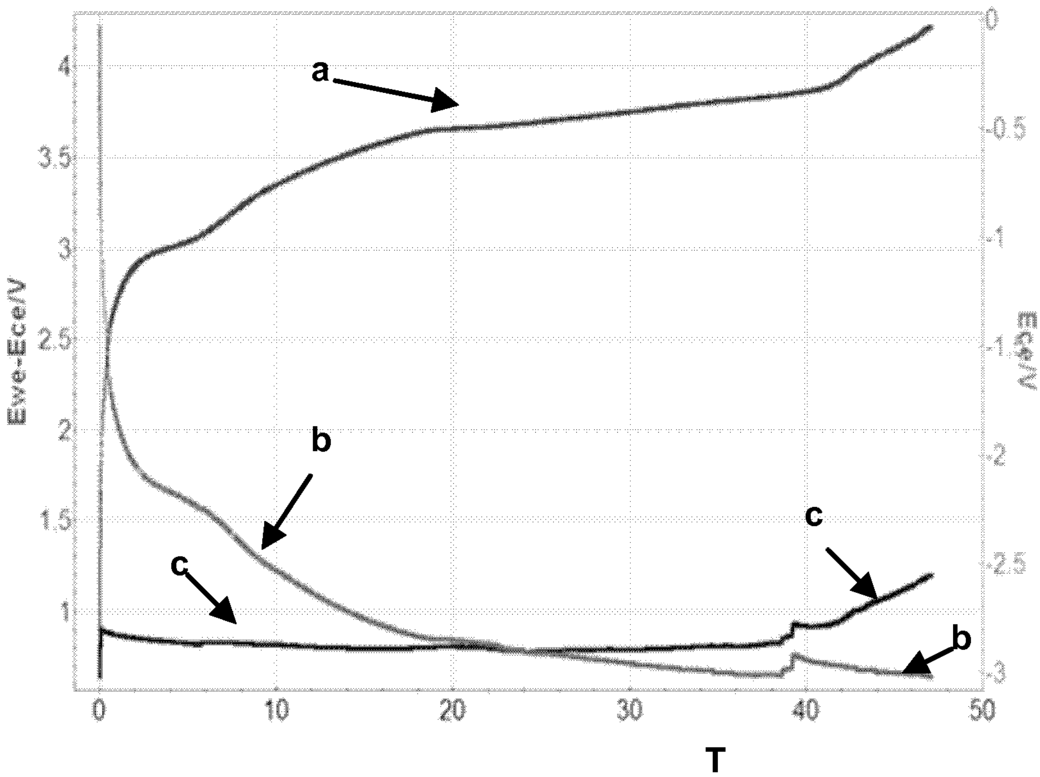

FIG. 6

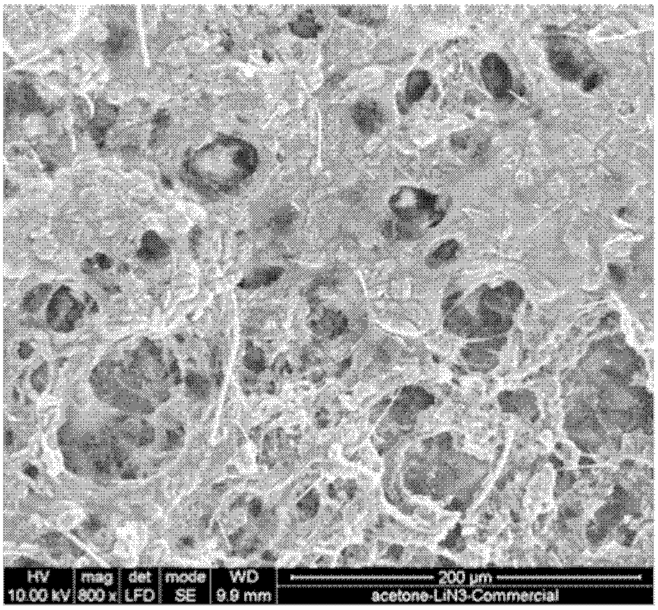
HV
10.00 kV
mag
800 x
det
LFD
mode
SE
WD
9.9 mm
200 µm
acetone-LiN3-Commercial

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2001047202 A
- EP 0966769 A


### Littérature non-brevet citée dans la description


- **D. E. CHAVEZ ; M. A. HISKEY ; R. D. GILARDI.** *Angew. Chem.,* 2000, vol. 112, 1861-1863
- *Angew. Chem. Int. Ed.,* 2000, vol. 39, 1791-1793